# EUROPÄISCHE PATENTSCHRIFT

(11) **EP 2 413 330 B1**
(45) Veröffentlichungstag und Bekanntmachung des Hinweises auf die Patenterteilung: **20.11.2013**
(21) Anmeldenummer: 11006145.4
(22) Anmeldetag: 27.07.2011
(51) Int. Cl.: G21C 19/48, G21C 19/50, C22B 60/02

(54) **Verfahren für eine trockene Wiederaufbereitung abgebrannter (bestrahlter) fester Kernbrennstoffe und eine Vorrichtung zur Durchführung des Verfahrens**
Method for dry recycling of spent (irradiated) solid nuclear fuels and a device for performing the method
Procédé de recyclage sec de carburant nucléaires solides épuisés (irradiés) et dispositif destiné à l'exécution du procédé

(30) Priorität: 29.07.2010 DE 102010036737
(43) Veröffentlichungstag der Anmeldung: 01.02.2012
(73) Patentinhaber: OOO DINATRON METAL, 02105 g. Kiev (UA)
(72) Erfinder: Krüger, Erwin, 71686 Remseck (DE)
(74) Vertreter: Jeck, Anton

(56) Entgegenhaltungen:
- DE-A1- 2 064 983
- DE-B- 1 124 248

## Beschreibung

Die Erfindung betrifft ein Verfahren für eine trockene Wiederaufbereitung abgebrannter (bestrahlter) fester Kernbrennstoffe und eine Vorrichtung zur Durchführung des Verfahrens. Die Erfindung kann bei der Verarbeitung von Oxiden radioaktiver Abfälle verwendet werden, aber vor allem bei der Verarbeitung von abgebrannten Brennelementen.

Nukleare Brennstoffe werden, wie bekannt, in offenen oder geschlossenen Brennstoffkreisläufen (NFC) betrieben.

Die im offenen Kreislauf verwendeten Brennstoffelemente werden nach dem Gebrauch vorübergehend gelagert, bevor sie in Salzbergwerken deponiert werden. Beim geschlossenen Brennstoffkreislauf erfolgt die Auflösung von abgebrannten Brennelementen in sauren, wässrigen Lösungen mit einem Verhältnis der abgebrannten Brennelemente zu der flüssigen Lösung zwischen 1 und 50 bis 100. Das Hauptziel ist dabei, Uran und Plutonium für eine spätere Herstellung von Kernbrennstoff zu gewinnen. Das bekannteste Beispiel ist der PUREX-Prozess.

Die herkömmlichen Verfahren mit offenem oder geschlossenem Brennstoffkreislauf haben erhebliche Nachteile, die da sind:
- geringe Umweltsicherheit im Zusammenhang mit der Notwendigkeit einer langfristigen Lagerung und/oder Aufbewahrung großer Mengen radioaktiver Abfälle,
- hohe Kosten für langfristige Lagereinrichtungen und Deponien zur Entsorgung,
- Schwierigkeiten bei der Gewährleistung einer langfristigen Isolierung der Brennelemente aus der Biosphäre (es besteht die reelle Gefahr einer Freisetzung von Radionukliden für den Fall, dass eine Isolierung der Brennelemente während der langfristigen Lagerung nicht gewährleistet werden kann),
- die Notwendigkeit eines ständigen Schutzes der Deponien wegen möglicher, terroristischer Anschläge,
- die Notwendigkeit einer kontinuierlichen Überwachung des Zustands der gespeicherten Materialien,
- eine deutliche Zunahme der flüssigen, radioaktiven Abfälle (ca. 50 bis 100 Tonnen pro 1 Tonne SNF) bei einem geschlossenen Brennstoffkreislauf,
- hohe Kosten für die Bearbeitung (ca. 1000 Euro für 1 kg abgebrannter Brennelemente) in einem geschlossenen Brennstoffkreislauf und
- eine Verschlechterung der Stoffe bei jeder weiteren Verarbeitung (Wachstum der Restaktivität und nichtproduktiven Absorption der Neutronen).
- Gefahr der Beförderung der abgebrannten Kernbrennstoffe zum Verarbeitungsbetrieb.

Es ist Aufgabe der Erfindung, ein Verfahren für eine Wiederaufbereitung abgebrannter (strahlender) fester Kernbrennstoffe zu entwickeln, wobei durch das Verfahren erreicht werden soll:
1. eine deutliche Verringerung der Kosten für die Wiederaufbereitung (in den meisten Fällen wird kein geschlossener Brennstoffkreislauf verwendet, weil dies unwirtschaftlich ist),
2. eine starke Verringerung oder eine vollständige Beseitigung der flüssigen, radioaktiven Abfälle bei der Wiederaufbereitung der abgebrannten Brennelemente und
3. eine deutliche Verbesserung der Qualität des Recycling-Kraftstoffs.

Die herkömmlichen Verfahren sind nicht zur metallurgischen Verarbeitung abgebrannter Brennelemente geeignet. Dies beruht auf der Tatsache, dass im Falle der Erwärmung der abgebrannten Brennelemente in einem Tiegel das Tiegelmaterial mit dem Metall der zur Entsorgung bestimmten, abgebrannten Brennelemente zu reagieren beginnen würde. Dieses Problem löst das neue Verfahren durch die Verwendung einer so genannten Tiegel-Reduktionsanlage und Tiegel-Absetzanlage.

Als Ausgangmaterial sowohl für die Tiegel-Reduktionsanlage, als auch für die Tiegel-Absetzanlage wird Magnesiumoxid mit 15 bis 17 Mol-% Zirkonoxid verwendet, das in einem Desintegrator zu Partikeln von weniger als 1 Mikrometer dispergiert wird.

Das Tiegelmaterial wird in einer heißisostatischen Presse (HIP oder Gasostat) in einer Polyurethanform bei einem Heliumdruck von 1000 MPa und einer Temperatur von etwa 2000 °C hergestellt, um sicherzustellen, dass die innere Oberfläche von beiden Tiegeln (Tiegel-Reduktionsanlage und Tiegel-Absetzanlage) mit dem geschmolzenen Uran nicht reagiert. Darüber hinaus nehmen die beiden Tiegel in der HIP durch Antiadhäsion gesättigte, gasförmige Komponenten (z. B. Helium, Xenon, Krypton etc. mit Ausnahme von Argon) auf. Deswegen wird die Schmelze während der Wiederaufbereitung abgebrannter (bestrahlter) fester Kernbrennstoffe im Fall der Tiegel-Reduktionsanlage sowie im Fall der Tiegel-Absetzanlage die Wände der beiden Tiegel nicht angreifen. Die Schmelze wird sich in einem Schwebezustand befinden, da das aus der beheizten Wand des Tiegels entweichende Helium einen Kontakt zwischen dem Tiegel und der Schmelze verhindert.

Die Tiegel-Reduktionsanlage, sowie die Tiegel-Absetzanlage werden in der heißisostatischen Presse in den folgenden Verfahrensschritten hergestellt:
1. Evakuierung in der HIP bei 10⁻² Torr bei einer Temperatur von 60 bis 180 °C,
2. Zuführung von Helium zur PU-Form und Anstieg des Heliumdrucks bis zu 1000MPa,
3. Beheizung des Tiegels in folgenden Stufen:
   bis zu 250 °C in 50 °C/min,
   bis zu 780 °C in 100 °C/min,
   bis zu 1500 °C in 250-300 °C/min,
   bis zu 2000 °C in beliebigen Stufen,
4. der Tiegel wird einer Temperatur von bis zu 2000 °C für 1 bis 3 Stunden ausgesetzt und
5. Kühlen unter Druck bis zu 1000MPa bei 500-600 °C/min.

Das Verfahren der Wiederaufbereitung abgebrannter (bestrahlter), fester Kembrennstoffe besteht aus drei Phasen.

In der ersten Phase werden die abgebrannten Kernbrennstoffe in die Tiegel-Reduktionsanlage gelegt, und es erfolgt eine Erwärmung bis ca. 1500 °C. Der in die Tiegel-Reduktionsanlage eingebrachte Kernbrennstoff (Urandioxid) wird bis zur Reduktionstemperatur erhitzt, bei der das Urandioxid zu Uran reduziert wird. Dabei wird das Uran desoxidiert, indem es mittels Ca, Mg, Al usw. reduziert wird.

Als Ergebnis der Reduzierung wird metallisches Uran in der Schmelze und Schlacke der Oxide von Ca, Mg, Al usw. gebildet. In die Schlacke wird ein Lösungsmittel, z. B. Kryolith (CaAlF6) beigemischt. Bei diesem metallurgischen Verfahren entsteht die mit Plutonium und Transuran legierte Uranschmelze im Unterteil der Tiegel-Reduktionsanlage. Im Oberteil der Tiegel-Reduktionsanlage entsteht die mit den gasartigen (Xenon, Krypton) und mit den leichtflüchtigen (Strontium, Zäsium, Jod usw.) Produkten gesättigte, flüssige Schlacke. Ein Teil dieser Produkte bleibt in der Schlacke. Der andere Teil geht nach oben durch die Schlacke und wird durch das Sorbens aufgenommen.

Um die Zerfallsprodukte zu sammeln, ist die Haube der Tiegel-Reduktionsanlage mit Sorbens gefüllt, welches eine hohe, spezifische Oberfläche (≥ 2000 m²/g) aufweist. Die Haube ist vorher gekühlt, da das Sorbensmaterial in kaltem Zustand effektiver wirkt. Wie früher erwähnt wurde, werden Gase und Erdalkalimetalle wie Strontium, Zäsium, Jod u. a., von dem Sorbensmaterial und der Schlacke aufgenommen.

In der beheizten Tiegel-Reduktionsanlage bildet die Haube mit den gesamten Teilen einen Induktor.

Die mit den Sorptionsmaterialien gefüllte Haube wird aus der Tiegel-Reduktionsanlage entfernt.

In der zweiten Phase wird eine zweite Haube zur Tiegel-Reduktionsanlage gefördert. Diese Haube kann aus Kupfer gebildet sein und innen mit einem Antiklebstoff, z. B. Bornitrid, beschichtet sein, damit die Schlacke nicht zu sehr klebt. Ebenfalls von einem Kühlmittel gekühlt, berührt sie den Badspiegel der Schlackenschmelze. Dabei wird ein Rüttler zum Ablassen der Schlacke angeschaltet. Auf diese Weise wird mehrmals verfahren, bis der Badspiegel der Schmelze geklärt ist.

In der dritten Phase wird die Schmelze in eine Tiegel-Absetzanlage ausgekippt und bei idealen isothermen Bedingungen stehen gelassen. Die isothermen Bedingungen weisen keinen durchmesser- oder höhenabhängigen Temperaturgradienten auf (denn die Tiegel-Absetzanlage stellt sicher, dass weder vertikale noch diametrale Temperaturgradienten entstehen). Es erfolgt eine typische Diffusionstrennung nach der Atommasse. Das schwere Material geht unter, während das leichte Material aufsteigt (schwimmt). Die Expositionszeit (Verweilzeit) kann 2 bis 3 Stunden dauern.

Die Tiegel-Absetzanlage wird mit Hilfe von Faltbandheizern (mit Gleichstrom ohne elektromagnetische Schwingungen) bis auf min. 1500 °C erwärmt und zwecks Trennung von der uranhaltigen Schmelze nach den Atommassen im Laufe von 1,5 bis 6 Stunden je nach Anforderungen in Bezug auf Metallreinheit stehen gelassen.

Demgemäß schwimmen auch solche Spaltmaterialien, wie Molybdän, Zirkonium usw., im schweren Uran auf, und die schweren, transuranischen Spaltmaterialien (Plutonium, Amerizium, Curium usw.) sinken ab. Danach wird die Tiegel-Absetzanlage allmählich gekühlt und ein Rohblock entnommen. Nachdem der Rohblock gehärtet ist, wird dieser mittels eines Gamma-Detektors markiert, denn die Gammastrahlung wird von dem dichten Stoff absorbiert und von dem leichten Stoff, z. B. Zirkonium oder Titan, durchgelassen. Die Grenze der Elemententrennung wird dabei sichtbar. Danach wird der Rohblock in Elemente geschnitten (aufgeteilt) und einer massenspektrometrischen Kontrolle unterzogen.

Die infolge der Trennung und Aufteilung gemäß den Grenzen hergestellten Rohblockteile können wieder der isothermen Exposition in der Tiegel-Absetzanlage ausgesetzt werden, damit abnehmbare Fremdbestandteile gewonnen werden.

Dieses Verfahren und diese Vorrichtung erlauben es, die Kosten für die Aufbereitung deutlich zu verringern, die flüssigen, radioaktiven Abfälle aus dem Prozess vollständig auszuschließen und eine Verbesserung der Qualität der Recyclingkraftstoffe zu erreichen.

## Patentansprüche

1. Verfahren für eine trockene Wiederaufbereitung abgebrannter (bestrahlter), fester Kernbrennstoffe,
**dadurch gekennzeichnet,**
**dass**
- eine Tiegel-Reduktionsanlage und eine Tiegel-Absetzanlage vorgesehen werden, wobei
- als Ausgangsmaterial sowohl für die Tiegel-Reduktionsanlage, als auch für die Tiegel-Absetzanlage Magnesiumoxid mit 15-17 Mol-% Zirkonoxid verwendet wird, das in einem Desintegrator zu Partikeln von weniger als 1 Mikrometer dispergiert wird, und
- sodann in einer heißisostatischen Presse (HIP) die Tiegel-Reduktionsanlage und die Tiegel-Absetzanlage in einer Polyurethanform (PU-Form) bei einem Druck von 1000 Mpa und einer Temperatur von etwa 2000 °C in folgenden Verfahrensschritten hergestellt werden:
1. Evakuierung in der HIP bei einem Druck von 10⁻² Torr und bei einer Temperatur von 60-180 °C,
2. Zuführen von Helium zur PU-Form und Anstieg des Heliumdrucks bis zu 1000MPa,
3. Beheizung des Tiegels in folgenden Stufen:
bis zu 250 °C in 50 °C/min,
bis zu 780 °C in 100 °C/min,
bis zu 1500 °C in 250-300 °C/min,
bis zu 2000 °C in beliebigen Stufen,
4. der Tiegel wird einer Temperatur von bis zu 2000 °C für 1 bis 3 Stunden ausgesetzt und
5. Kühlen unter Druck bis zu 1000 MPa bei 500-600 °C/min,
- der abgebrannte Kernbrennstoff (Urandioxid) in der Tiegel-Reduktionsanlage bis zur Reduktionstemperatur (Desoxidationstemperatur) erhitzt wird, wobei Urandioxid in Uran reduziert wird und die Temperatur bis 1500 °C angehoben wird,
- das Uran desoxidiert wird, wobei das Urandioxid mittels Ca, Mg, Al usw. reduziert wird, bis Zerfallsprodukte (Gase wie Xenon, Krypton u. a.) in die Schlacke entweichen,
- die Zerfallsprodukte in einer mit Sorbens gefüllten Haube gesammelt werden, wobei das Sorbens eine hohe, spezifische, z. B. bornitridhaltige Oberfläche (≥ 2000 m²), aufweist,
- das Sorptionsmaterial im Tiegel gekühlt wird,
- Gase und Erdalkalimetalle, wie Strontium, Zäsium, Jod u. a., von diesem Sorptionsmaterial und der Schlacke aufgenommen werden,
- das Sorbens in der Haube der Endlagerung zugeführt wird und
- die Uranschmelze in der Tiegel-Absetzanlage weiterverarbeitet wird.

2. Verfahren nach Anspruch 1,
**dadurch gekennzeichnet, dass**
- die Schmelze in die Tiegel-Absetzanlage gekippt wird und dort bei idealen, isothermen Bedingungen stehen gelassen wird, ohne dass durchmesser- und höhenabhängige Temperaturgradienten auftreten,
- dabei eine typische Diffusionstrennung nach Atommasse durchgeführt wird, wobei die Verweilzeit (Expositionszeit) 2 bis 3 Stunden dauert und
- die Tiegel-Absetzanlage mit Hilfe von Faltbandheizern mit Gleichstrom ohne elektromagnetische Schwingungen bis auf min. 1500 °C erwärmt wird und zwecks Trennung der uranhaltigen Schmelze nach den Atommassen im Laufe von 1,5 bis 6 Stunden je nach Anforderungen in Bezug auf Metallreinheit stehen gelassen wird.

3. Vorrichtung zur Durchführung des Verfahrens nach Anspruch 1 oder 2,
**dadurch gekennzeichnet,**
**dass**
- als Ausgangsmaterial sowohl für die Tiegel-Reduktionsanlage, als auch für die Tiegel-Absetzanlage Magnesiumoxid mit 15-17 Mol-% Zirkonoxid verwendet wird, das in einem Desintegrator zu Partikeln von weniger als 1 Mikrometer dispergiert wird, und
- sodann in einer heißisostatischen Presse (HIP) die Tiegel-Reduktionsanlage und die Tiegel-Absetzanlage in einer Polyurethanform (PU-Form) bei einem Druck von 1000 Mpa und einer Temperatur von etwa 2000 °C in folgenden Verfahrensschritten hergestellt werden:
1. Evakuierung in der HIP bei einem Druck von 10⁻² Torr und bei einer Temperatur von 60-180 °C,
2. Zuführen von Helium zur PU-Form und Anstieg des Heliumdrucks bis zu 1000 MPa,
3. Beheizung des Tiegels in folgenden Stufen:
bis zu 250 °C in 50 °C/min,
bis zu 780 °C in 100 °C/min,
bis zu 1500 °C in 250-300 °C/min,
bis zu 2000 °C in beliebigen Stufen,
4. der Tiegel wird einer Temperatur von bis zu 2000 °C für 1 bis 3 Stunden ausgesetzt und
5. Kühlen unter Druck bis zu 1000 MPa bei 500-600 °C/min.

## Claims

1. A method for dry recycling off spent (irradiated) solid nuclear fuels,
**characterized in that**
- a crucible reduction system and a crucible settling system are provided, in which
- as starting material for both the crucible reduction system and the crucible settling system, magnesium oxide with 15-17 mol-% zirconium oxide is used, which is dispersed in a disintegrator into particles of less than one micrometer, and
- then in a hot isostatic press (HIP), the crucible reduction system and the crucible settling system are produced in a polyurethane mold (PU mold) at a pressure of 1000 MPa and a temperature of approximately 2000°C in the following method steps:
1. evacuation in the HIP at a pressure of 10⁻² Torr and at a temperature of 60-180°C;
2. delivering helium to the PU mold and raising the helium pressure to 1000 MPa;
3. heating the crucible in the following stages:
up to 250°C at 50°C/min,
up to 780°C at 100°C/min,
up to 1500°C at 250-300°C/min,
up to 2000°C in arbitrary stages;
4. the crucible is exposed to a temperature of up to 2000°C for 1 to 3 hours; and
5. cooling under pressure of up to 1000 MPa at 500-600°C/min;
- the spent nuclear fuel (uranium dioxide) is heated in the crucible reduction system to the reduction temperature (deoxidation temperature), reducing uranium dioxide to uranium, and the temperature is raised to 1500°C;
- the uranium is deoxidized, reducing the uranium dioxide by means of Ca, Mg, Al, etc., until products of decomposition (gases such as xenon, krypton, and others) escape into the slag;
- the products of decomposition are collected in a sorbent-filled hood, the sorbent having a high specific surface area (≥ 2000 m²), containing boron nitride, for instance;
- the sorbent material in the crucible is cooled;
- gases and alkaline earth metals, such as strontium, cesium, iodine, and others, are absorbed by this sorbent material and the slag;
- the sorbent in the hood is taken away for final disposal; and
- the uranium melt in the crucible settling system is recycled.

2. The method of claim 1,
**characterized in that**
- the melt is tipped into the crucible settling system and there left to stand under ideal isothermic conditions, without the occurrence of diameter- and height-dependent temperature gradients;
- in the process a typical diffusion separation by atomic mass is performed, the dwell time (exposure time) lasting from 2 to 3 hours; and
- the crucible settling system is heated with the aid of folding-conveyor heaters with direct current without electromagnetic oscillation to at least 1500°C and, for the sake of separating the uranium-bearing melt by the atomic masses, is left to stand over the course of 1.5 to 6 hours, depending on requirements in terms of metal purity.

3. An apparatus for performing the method of claim 1 or 2,
**characterized in that**
- as starting material for both the crucible reduction system and the crucible settling system, magnesium oxide with 15-17 mol-% zirconium oxide is used, which is dispersed in a disintegrator into particles of less than one micrometer, and
- then in a hot isostatic press (HIP), the crucible reduction system and the crucible settling system are produced in a polyurethane mold (PU mold) at a pressure of 1000 MPa and a temperature of approximately 2000°C in the following method steps:
1. evacuation in the HIP at a pressure of 10⁻² Torr and at a temperature of 60-180°C;
2. delivering helium to the PU mold and raising the helium pressure to 1000 MPa;
3. heating the crucible in the following stages:
up to 250°C at 50°C/min,
up to 780°C at 100°C/min,
up to 1500°C at 250-300°C/min,
up to 2000°C in arbitrary stages;
4. the crucible is exposed to a temperature of up to 2000°C for 1 to 3 hours; and
5. cooling under pressure up to 1000 MPa at 500-600°C/min.

## Revendications

1. Procédé de retraitement à sec de combustibles nucléaires épuisés (irradiés), **caractérisé en ce**
**que**
- une installation de réduction en creuset et une installation de décantation en creuset sont prévues, sachant que
- de l'oxyde de magnésium avec 15 à 17 % en moles d'oxyde de zirconium, qui est dispersé dans un désintégrateur en particules de moins de 1 micromètre, est utilisé comme matériau de départ aussi bien pour l'installation de réduction en creuset que pour l'installation de décantation en creuset, et
- l'installation de réduction en creuset et l'installation de décantation en creuset sont ensuite fabriquées dans une presse isostatique à chaud (HIP) dans un moule en polyuréthane (moule PU) à une pression de 1 000 MPa et une température d'environ 2 000 °C selon les étapes de procédé suivantes :
1. réalisation d'un vide dans la HIP à une pression de 10⁻² torr et une température de 60-180 °C,
2. amenée d'hélium au moule PU et augmentation de la pression d'hélium jusqu'à 1 000 MPa,
3. chauffage du creuset selon les paliers suivants :
jusqu'à 250 °C à 50 °C/min,
jusqu'à 780 °C à 100 °C/min,
jusqu'à 1 500 °C à 250-300 °C/min,
jusqu'à 2 000 °C selon des paliers quelconques,
4. le creuset est exposé à une température pouvant atteindre 2 000 °C pendant 1 à 3 heures et
5. refroidissement sous une pression pouvant atteindre 1 000 MPa à 500-600 °C/min,
- le combustible nucléaire épuisé (dioxyde d'uranium) est chauffé dans l'installation de réduction en creuset jusqu'à la température de réduction (température de désoxydation), le dioxyde d'uranium étant réduit en uranium et la température augmentée jusqu'à 1 500 °C,
- l'uranium est désoxydé, le dioxyde d'uranium étant réduit au moyen de Ca, Mg, Al, etc. jusqu'à ce que les produits de décomposition (gaz tels que xénon, krypton, entre autres) se dégagent dans les scories,
- les produits de décomposition sont collectés dans une calotte remplie de sorbant, le sorbant présentant une surface spécifique élevée (≥ 2 000 m²), contenant par exemple du nitrure de bore,
- le matériau de sorption est refroidi dans le creuset,
- les gaz et métaux alcalino-terreux tels que strontium, césium, iode, entre autres, sont absorbés par ce matériau de sorption et les scories,
- le sorbant dans la calotte est amené au stockage définitif et
- l'uranium fondu est soumis à un traitement ultérieur dans l'installation de décantation en creuset.

2. Procédé selon la revendication 1,
**caractérisé en ce que**
- la matière fondue est déversée dans l'installation de décantation en creuset où elle est laissée au repos dans des conditions isothermes idéales, sans que se produisent des gradients de température dépendants du diamètre et de la hauteur,
- une séparation par diffusion typique par masse atomique est effectuée, le temps de séjour (temps d'exposition) étant de 2 à 3 heures, et
- l'installation de décantation en creuset est chauffée à au moins 1 500 °C à l'aide d'éléments chauffant à bande plissée à courant continu sans oscillations électromagnétiques et, en vue de la séparation de la matière fondue contenant de l'uranium par masses atomiques, laissée au repos pendant 1,5 à 6 heures en fonction des exigences en matière de pureté du métal.

3. Dispositif pour réaliser le procédé selon la revendication 1 ou 2,
**caractérisé en ce**
**que**
- de l'oxyde de magnésium avec 15 à 17 % en moles d'oxyde de zirconium, qui est dispersé dans un désintégrateur en particules de moins de 1 micromètre, est utilisé comme matériau de départ aussi bien pour l'installation de réduction en creuset que pour l'installation de décantation en creuset, et
- l'installation de réduction en creuset et l'installation de décantation en creuset sont ensuite fabriquées dans une presse isostatique à chaud (HIP) dans un moule en polyuréthane (moule PU) à une pression de 1 000 MPa et une température d'environ 2 000 °C selon les étapes de procédé suivantes :
1. réalisation d'un vide dans la HIP à une pression de 10⁻² torr et une température de 60-180 °C,
2. amenée d'hélium au moule PU et augmentation de la pression d'hélium jusqu'à 1 000 MPa,
3. chauffage du creuset selon les paliers suivants :
jusqu'à 250 °C à 50 °C/min,
jusqu'à 780 °C à 100 °C/min,
jusqu'à 1 500 °C à 250-300 °C/min,
jusqu'à 2 000 °C selon des paliers quelconques,
4. le creuset est exposé à une température pouvant atteindre 2 000 °C pendant 1 à 3 heures et
5. refroidissement sous une pression pouvant atteindre 1 000 MPa à 500-600 °C/min.
